## Europäisches Patentamt

## European Patent Office

## Office européen des brevets

(11) Veröffentlichungsnummer: **0 281 802 B1**

(12) **EUROPÄISCHE PATENTSCHRIFT**

(45) Veröffentlichungstag der Patentschrift:
27.03.91 Patentblatt 91/13

(51) Int. Cl.⁵: **A01C 5/06**

(21) Anmeldenummer: 88102257.8

(22) Anmeldetag: 17.02.88

(54) **Zustreicheinrichtung.**

(30) Priorität: 05.03.87 DE 3707006

(43) Veröffentlichungstag der Anmeldung:
14.09.88 Patentblatt 88/37

(45) Bekanntmachung des Hinweises auf die
Patenterteilung:
27.03.91 Patentblatt 91/13

(84) Benannte Vertragsstaaten:
AT DE ES FR GB IT NL

(56) Entgegenhaltungen:
DE-A- 3 223 558
DE-A- 3 409 033
DE-B- 2 726 340
US-A- 4 037 545

(73) Patentinhaber: A.J. Tröster GmbH + Co KG
Kaiserstrasse 9-11
W-6308 Butzbach (DE)

(72) Erfinder: Link, Alfred
Alte Brauerei 1
W-6308 Butzbach (DE)

(74) Vertreter: Schlagwein, Udo, Dipl.-Ing.
Anwaltsbüro Ruppert & Schlagwein
Frankfurter Strasse 34
W-6350 Bad Nauheim (DE)

EP 0 281 802 B1

**Beschreibung**

Die Erfindung bezieht sich auf eine Zustreicheinrichtung mit an einem Träger befestigten, nebeneinander angeordneten, aus Federstahl bestehenden Zustreichern, insbesondere für eine Drillmaschine, welche jeweils eine zum Erdboden führende Strebe mit zumindest einem schräg zur Fahrtrichtung ausgestellten, entlang dem Erdboden verlaufenden Zustreichelement haben, von dem aus die Strebe mit einem geradlinigen Führungsbereich schräg nach oben führt. Eine solche Zustreicheinrichtung ist beispielsweise in der DE-PS 27 26 340 beschrieben.

Wenn die Zustreicher jeweils nur ein in Fahrtrichtung ausgestelltes Zustreichelement aufweisen, wie das bei den Zustreichern gemäß Figur 7 der genannten DE-PS 27 26 340 der Fall ist, oder wenn die Zustreicher unterschiedlich lang sind, was die DE-PS 34 29 318 zeigt, dann wirken während des Einsatzes relativ hohe Biegekräfte auf die Zustreicher, durch welche ihre Streben sich quer zur Fahrtrichtung verbiegen können. Der Gefahr eines Verbiegens der Zustreicher begegnet man derzeit dadurch, daß man sie ausreichend stark dimensioniert, so daß sie ein hohes Biegemoment aufweisen. Weiterhin sorgt man dafür, daß die Streben relativ steil nach unten gerichtet sind, so daß die Zustreichelemente keinen unerwünscht großen Abstand von dem Träger der Zustreicher erhalten und dadurch große Hebelarme entstehen. Gemäß der DE-AS 27 26 340 verläuft der geradlinige Führungsbereich unter einem Winkel von ungefähr 30 Grad zum Zustreichelement hin. Durch einen steilen Anstiegswinkel und durch einen großen Querschnitt der Zustreicher ergibt sich, daß die Zustreichelemente gar nicht oder nur beim Auftreten von relativ hohen Kräften nach oben hin ausweichen können. Die Folge davon ist, daß sich vor den schräg nach unten führenden Streben Ernterückstände ansammeln können, die entweder ruckweise freigegeben werden oder zu einem Verstopfen führen und deshalb häufig durch Anheben der gesamten Drillmaschine entfernt werden müssen.

Der Erfindung liegt die Aufgabe zugrunde, eine Zustreicheinrichtung der eingangs genannten Art derart zu gestalten, daß ihre Zustreichelemente seitlichen Kräften gut widerstehen können, ohne daß die Gefahr von Materialansammlungen vor den Zustreichelementen besteht.

Diese Aufgabe wird auf überraschend einfache Weise dadurch gelöst,,daß der Führungsbereich der Strebe aus zwei geradlinigen, mit einem stumpfen Winkel aufeinanderstoßenden Bereichen besteht und der mit dem Zustreichelement verbundene erste Bereich vom Ende des Zustreichelementes mit einem Steigungswinkel von etwa 25 Grad oder weniger und der sich daran anschließende zweite Bereich steiler ansteigt.

Der erfindungsgemäße unterschiedliche Steigungswinkel der Streben führt dazu, daß diese vom Erdboden aus flach ansteigen und dadurch beim Auftreffen auf ein Hindernis nach oben ausweichen können, anstatt das Hindernis vor sich her zu schieben. Da die Streben jedoch im vorderen Bereich steiler ansteigen, bleibt ihre Gesamtlänge relativ gering, so daß den einseitig auf die Zustreichelemente wirkenden Kräften nur ein relativ kurzer Hebelarm zur Verfügung steht. Dadurch wird der Gefahr eines Verbiegens der Streben begegnet.

Besonders vorteilhaft für eine Zustreicheinrichtung für Drillmaschinen ist es, wenn sich dem steiler ansteigenden Bereich ein senkrecht nach oben führender dritter Bereich anschließt. Dadurch wird der Abstand der Zustreichelemente von dem Träger besonders gering. Ihre Fähigkeit, leicht nach oben hin auszuweichen, bleibt jedoch durch den flachen Anstiegswinkel ihres untersten, flachen Bereiches erhalten.

Die Zustreicher erhalten mit geringem Aufwand eine ausreichend hohe Elastizität, wenn der senkrechte Bereich am oberen Ende in eine Windung übergeht, von der aus ein waagerechter Bereich zum den Zustreicher haltenden Träger führt.

Benachbarte Zustreichelemente können sich in Abstand zueinander überlappen, so daß von ihnen der gesamte Boden hinter einer Maschine bestrichen und der Boden dadurch besonders gut eingeebnet wird, wenn vom Träger aus abwechselnd Zustreicher zunächst nach vorn zu einer Windung, dann senkrecht nach unten und anschließend nach hinten und andere Zustreicher zunächst nach hinten zu einer Windung, dann senkrecht nach unten und anschließend nach hinten verlaufen. Eine solche Ausführungsform hat gegenüber einer von der Wirkung her vergleichbaren Ausführung, wie sie zum Beispiel in der DE-PS 34 29 318 beschrieben ist, den Vorteil, daß für eine Zustreicheinrichtung insgesamt nur zwei Arten von Zustreichern erforderlich sind.

Die Erfindung läßt zahlreiche Ausführungsformen zu. Zur weiteren Verdeutlichung ihres Grundgedankens ist eine davon in der Zeichnung dargestellt und wird nachfolgend beschrieben. In der Zeichnung zeigen die

Fig. 1 eine Seitenansicht einer erfindungsgemäß gestalteten Zustreicheinrichtung,
Fig. 2 eine Draufsicht auf die Zustreicheinrichtung,
Fig. 3 eine Draufsicht auf mehrere, nebeneinander angeordnete Zustreicher der Zustreicheinrichtung.

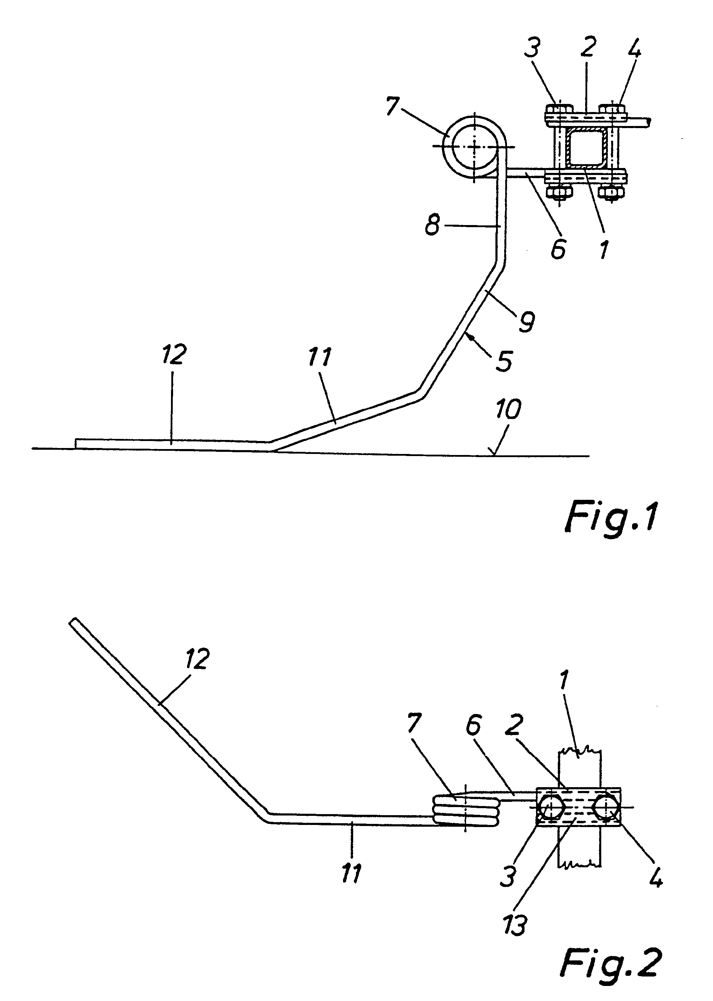

Die Figur 1 zeigt im Schnitt einen Träger 1, auf dem mittels einer Klemmschelle 2 und zweier Schrauben 3, 4 von oben her ein Zustreicher 5 befestigt ist. Dieser Zustreicher 5 führt von seiner Befestigungsstelle aus zunächst mit einem waagerechten Bereich 6 zu einer Windung 7, anschließend mit einem senkrechten Bereich 8 etwas nach unten, weist danach einen schräg nach hinten gerichteten, steilen Bereich 9 auf, dann einen bis zum Erdboden 10 führenden flachen Bereich 11 und anschliessend ein entlang dem Boden 10 verlaufendes,

EP 0 281 802 B1

schräg zur Fahrtrichtung ausgestelltes Zustreichelement 12. Die Bereiche 6, 8, 9 und 11 bilden zusammen mit der Windung 7 eine Strebe, welche das Zustreichelement am Träger 1 hält. Der Winkel zwischen dem flachen Bereich 11 und dem Erdboden 10 soll 25 Grad oder weniger betragen, damit der Zustreicher 5 bei nicht zur Seite zu schiebenden Hindernissen diese nicht vor sich her schiebt, sondern sich anhebt und dadurch über sie hinwegfährt.

Die Figur 2 verdeutlicht die zuvor beschriebene Gestaltung der Zustreicheinrichtung. Vor allem ist dort zu sehen, daß das Zustreichelement 12 schräg zur in den Figuren nach rechts weisenden Fahrtrichtung ausgestellt ist. Weiterhin zeigt diese Figur 2, daß der waagerechte Bereich mit einem u-förmigen Endabschnitt 13 die Schrauben 3, 4 umgreift und von der Klemmschelle auf dem Träger 1 gehalten wird.

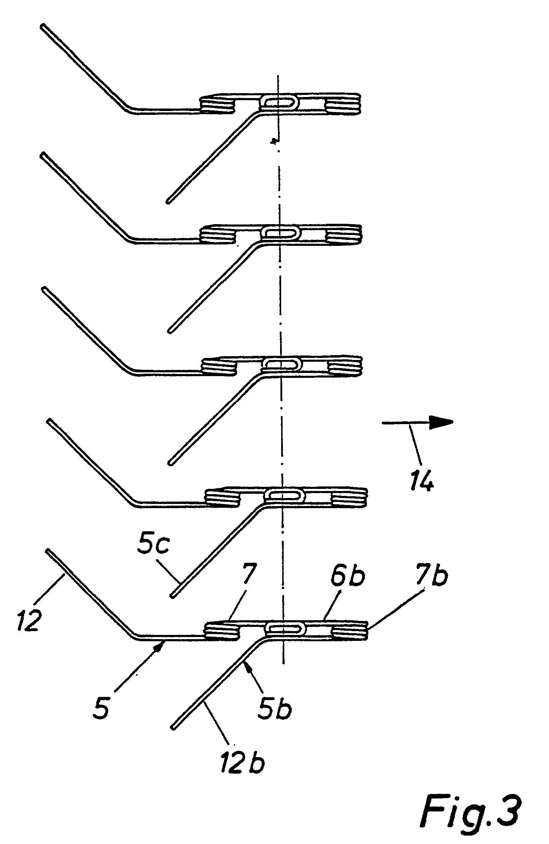

Der Figur 3 ist zu entnehmen, daß für eine Zustreicheinrichtung insgesamt nur zwei Arten von Zustreichern 5, 5b benötigt werden. Die Zustreicher 5 sind dabei so gestaltet, wie das in den Figuren 1 und 2 gezeigt ist. Bei den Zustreichern 5b verlaufen die waagerechten Bereiche 6b zunächst bis zur Windung 7b in Fahrtrichtung. Dadurch befindet sich das Zustreichelement 12b weiter vorn als das Zustreichelement 12 des angrenzenden Zustreichers 5, wodurch eine Überlappung benachbarter Zustreicher 12, 5c möglich wird.

## Auflistung der verwendeten Bezugszeichen

| 1 | Träger |
|---|---|
| 2 | Klemmschelle |
| 3 | Schraube |
| 4 | Schraube |
| 5 | Zustreicher |
| 6 | waagerechter Bereich |
| 7 | Windung |
| 8 | senkrechter Bereich |
| 9 | steiler Bereich |
| 10 | Erdboden |
| 11 | flacher Bereich |
| 12 | Zustreichelement |
| 13 | Endabschnitt |
| 14 | Fahrtrichtung |

## Ansprüche

1. Zustreicheinrichtung mit an einem Träger (1) befestigten, nebeneinander angeordneten, aus Federstahl bestehenden Zustreichern (5), insbesondere für eine Drillmaschine, welche jeweils eine zum Erdboden (10) führende Strebe mit zumindest einem schräg zur Fahrtrichtung ausgestellten, entlang dem Erdboden (10) verlaufenden Zustreichelement (12) haben, von dem aus die Strebe mit einem geradlinigen Führungsbereich schräg nach oben führt, dadurch gekennzeichnet, daß der Führungsbereich der Strebe aus zwei geradlinigen, mit einem stumpfen Winkel aufeinanderstoßenden Bereichen (9, 11) besteht und der mit dem Zustreichelement (12) verbundene erste Bereich (11) vom Ende des Zustreichelement (12) mit einem Steigungswinkel von 25 Grad oder weniger und der sich daren anschließende zweite Bereich (9) steiler ansteigt.

2. Zustreicheinrichtung nach Anspruch 1, dadurch gekennzeichnet, daß sich dem steiler ansteigenden Bereich (9) ein senkrecht nach oben führender dritter Bereich (8) anschließt.

3. Zustreicheinrichtung nach den Ansprüchen 1 oder 2, dadurch gekennzeichnet, daß der senkrechte

3

Bereich (8) am oberen Ende in eine Windung (7) übergeht, von der aus ein waagerechter Bereich (6) zum den Zustreicher (5) haltenden Träger (1) führt.

4. Zustreicheinrichtung nach einem oder mehreren der vorangehenden Ansprüche, dadurch gekennzeichnet, daß vom Träger (1) aus abwechselnd Zustreicher (5) zunächst nach vorn zu einer Windung (7), dann senkrecht nach unten und anschließend nach hinten und andere Zustreicher (5b) zunächst nach hinten zu einer Windung (7b), dann senkrecht nach unten und anschließend nach hinten verlaufen.

## Claims

1. Device for covering furrows with furrow-covering means (5) which are composed of spring steel, are arranged next to one another and are fixed on a carrier (1), in particular for a seed drill, which furrow-covering means (5) each have a strut leading to the ground (10) with at least one furrow-covering element (12) which is set out obliquely to the direction of travel, extends along the ground (10) and from which the strut leads obliquely upward with a rectilinear guide region, characterised in that the guide region of the struts consists of two rectilinear regions (9, 11) which abut at an obtuse angle and the first region (11) connected to the furrow-covering element (12) rises from the end of the furrow-covering element (12) with an angle of inclination of about 25° or less and the second region (9) adjacent thereto rises more steeply.

2. Device for covering furrows according to claim 1, characterised in that a third region (8) leading vertically upward follows the more steeply rising region (9).

3. Device for covering furrows according to claims 1 or 2, characterised in that the vertical region (8) passes into a coil (7) at the upper end, from which a horizontal region (6) leads to the carrier (1) holding the furrow-covering means (5).

4. Device for covering furrows according to one or more of the preceding claims, characterised in that, from the carrier (1), furrow-covering means (5) extend initially forward to a coil (7) then vertically downward and subsequently backward and other furrow-covering means (5b) extend initially backward to a coil (7b), then vertically downward and subsequently backward alternately.

## Revendications

1. Organe ou dispositif de recouvrement de sillons comportant des éléments de recouvrement de sillons (5) constitués d'acier à ressorts, disposés l'un à côté de l'autre, fixés sur un support (1), en particulier pour une machine à semer qui ont chacun une entretoise amenant au sol (10) avec un composant de recouvrement (12) disposé obliquement par rapport à la direction de marche, le long du sol (10), composant à partir duquel l'entretoise amène obliquement vers le haut par une partie de guidage droite, caractérisé en ce que la partie de guidage de l'entretoise est constituée de deux parties (9, 11) se rencontrant avec formation d'un angle obtus et la première partie (11) liée au composant de recouvrement (12) est ascendante à partir de l'extrémité du composant de recouvrement avec une inclinaison de 25 degrés ou moins et la deuxième partie (9) qui la suit monte avec une pente plus raide.

2. Dispositif de recouvrement de sillons selon la revendication 1 caractérisé en ce qu'une troisième partie ascendante (8) amenant verticalement vers le haut fait suite à la partie (9) à pente plus raide.

3. Dispositif de recouvrement de sillons selon les revendications 1 et 2 caractérisé en ce que la partie verticale (8) passe à l'extrémité supérieure à un enroulement (7) à partir duquel une partie horizontale (6) amène au support (1) maintenant l'élément de recouvrement (5).

4. Dispositif de recouvrement de sillons selon une ou plusieurs des revendications précédentes caractérisé en ce qu'à partir du support (1) des éléments de recouvrement (5) sont alternativement disposés d'abord vers l'avant vers un enroulement (7), ensuite verticalement vers le bas et ensuite vers l'arrière et d'autres éléments de recouvrement (5b) d'abord vers l'arrière vers un enroulement (7b), ensuite verticalement vers le bas et ensuite vers l'arrière.

Fig.1

Fig.2

5c

12

5

7

6b

7b

5b

12b

*Fig.3*

14